# EUROPEAN PATENT SPECIFICATION

(11) **EP 4 143 244 B1**
(45) Date of publication and mention of the grant of the patent: **18.11.2026**
(21) Application number: 21718578.4
(22) Date of filing: 15.04.2021
(51) Int. Cl.: C08F 220/14, C08F 265/06, C08K 5/17, C08K 5/31, C09J 4/00, C09J 4/06

(54) **STABILIZERS FOR PARTICULARLY STORAGE-STABLE (METH)ACRYLATE-BASED REACTION RESINS COMPRISING ACIDIC ADHESION PROMOTERS**
STABILISATOREN FÜR BESONDERS LAGERSTABILE REAKTIONSHARZE AUF (METH)ACRYLATBASIS MIT SAUREN HAFTVERMITTLERN
STABILISATEURS, EN PARTICULIER POUR RÉSINES DE RÉACTION STABLES AU STOCKAGE À BASE DE (MÉTH)ACRYLATE COMPRENANT DES ADHÉSIFS ACIDES

(30) Priority: 28.04.2020 EP 20171697
(43) Date of publication of application: 08.03.2023
(73) Proprietor: Röhm GmbH, 64295 Darmstadt (DE)
(72) Inventor: KLEIN, Alexander, 55435 Gau-Algesheim (DE); LOTZ, Janos, 63571 Gelnhausen (DE)
(74) Representative: Röhm Patent Association
(86) International application number: PCT/EP2021/059762
(87) International publication number: WO 2021/219392

(56) References cited:
- EP-A1- 3 508 541
- WO-A2-02/48274
- US-A- 5 643 982
- US-A1- 2015 267 092

## Description

### Field of the Invention

The present invention relates to free radical-curing (meth)acrylate resins comprising stabilizers and acidic adhesion promoters, the (meth)acrylate resins being characterized by particularly high storage stability, even at relatively high temperatures, and a concomitant increase in the activity of the accelerator present in the (meth)acrylate resin. The special stabilizers increase the storage stability, give rise to a rapid cure rate, and make the curing properties insensitive to the acidic adhesion promoters present alongside them. This makes possible very good adhesion to a wide variety of materials and thus a broader field of use. The term (meth)acrylate resins as used herein encompasses all acrylate and methacrylate resins.

### Prior art

From the prior art, numerous (meth)acrylate resins are known, which have the most diverse compositions in order to be suitable for the most diverse fields of use. Typical fields of use for (meth)acrylate resins include coatings for floors, coatings for roofs or bridges, coatings for metals, such as corrosion-protection coatings or intumescent coatings, and also adhesives and sealants. After their production, (meth)acrylate resins are for such purposes often transported across long distances. International transport by sea in particular can result in long transport times.

(Meth)acrylate resins are not generally used immediately after their production and must therefore have adequate storage stability over relatively long periods. It is advantageous for (meth)acrylate resins to have adequate storage stability, including at higher temperatures, in order to keep storage and transport requirements low, such as a need for temperature-controlled transport or storage in refrigerated storage facilities. High storage stability is desirable also from the point of view of safety, in order to avoid uncontrolled polymerization during production and storage.

Appropriate additives in (meth)acrylate resins, such as crosslinkers, paraffins, stabilizers, adhesion promoters or the like can selectively improve the properties of the (meth)acrylate resin.

US4145477, EP1152014, US4076671, US4596857, GB1083486 and DE 19848483 disclose (meth)acrylate resin that includes (meth)acrylate monomers, at least one polymer soluble in (meth)acrylates, and paraffin. To achieve adequate adhesion on substrates such as metal or ceramic, acidic adhesion promoters in particular are used in (meth)acrylate resins in such systems.

DE 102007034458A1 discloses free radical-curing (meth)acrylate resins for intumescent coatings comprising, as adhesion promoters, copolymerizable acids based e.g. on (meth)acrylates, for example beta-carboxyethyl acrylate. These free radical-curing (meth)acrylate resins exhibit high storage stability when beta-carboxyethyl acrylate is used, but this is accompanied by an only limited adhesion effect. Inadequate adhesion results are shown particularly when polyfunctional (meth)acrylates are added as crosslinkers.

EP 14 690 21 discloses free radical-curing (meth)acrylate resins having methacryloyloxyethyl phosphate as adhesion promoter. These (meth)acrylate resins show good adhesion on a wide variety of substrates, but not high storage stability, particularly not at higher temperatures.

WO 2015/143005 discloses free radical-curing (meth)acrylate resins that comprise methacryloyloxyethyl phosphate as adhesion promoter and also a co-accelerator. The described co-accelerators are used to increase the activity of the accelerator present, which is also referred to as a reductant. Proposed therein as effective co-accelerators are bicyclic diaza compounds such as 1,4-diazabicyclo[2.2.2]octane (DABCO). Although these bicyclic diaza compounds show an effect as a co-accelerator and good adhesion to a wide variety of substrates, rapid-cure reactive (meth)acrylate resins comprising adhesion promoters such as methacryloyloxyethyl phosphate in particular show only unsatisfactory long-term storage stability with the disclosed co-accelerators.

US 2015/0267092 A1 describes amine co-accelerators for acrylic adhesives for bonding metal and plastic materials.

US 5,643,982 A discloses a non-flammable co-solvent composition as carrier for actives, such as accelerators, activators, catalysts and other materials in combination with adhesive compositions.

EP 3 508 541 A1 discloses a two-component adhesive composition comprising a (meth)acrylate compound having an alkoxysilyl group and an adhesive reinforcing agent.

WO 02/48274 A2 discloses an adhesive composition which can be used according to anaerobic or aerobic hardening mechanisms and which comprises (meth)acrylates.

There is accordingly great interest in providing novel (meth)acrylate resins that are both applicable to a wide variety of substrates, achieving lasting good adhesion, and are at the same time storage-stable over long periods including at higher temperatures.

### Object

The object of the present invention was accordingly to provide a novel (meth)acrylate-based reaction resin that is both storage stable and exhibits good adhesion properties on various substrates.

A further object was to develop a base reaction resin that, through appropriate formulations in the individual case, can be used in a wide variety of different applications.

The object was in particular to optimize reaction resins comprising acidic adhesion promoters such that it is possible to use the acidic adhesion promoters in (meth)acrylate resins, the disadvantages of the prior art are nevertheless overcome, and the resulting (meth)acrylate resins are particularly storage stable compared with the prior art and show high adhesion on a wide variety of substrates.

Other objects not mentioned explicitly can be derived from the prior art, the description, the examples or the overall context of the application.

### Description

The object is achieved by a novel reaction resin that includes at least one (meth)acrylate, at least one polymer and/or urethane (meth)acrylate, at least one adhesion promoter having at least one acidic group and at least one non-nucleophilic base, hereinafter referred to as a stabilizer.

The nucleophilic base can have various functions here that also reflect the terms used to describe these components. Description as a stabilizer reflects the effect in terms of improved storage stability of the reaction resin. In order to allow a clear distinction to be made, the term stabilizer is not hereinafter used to describe other stabilizing additives, such as UV stabilizers.

This reaction resin is a (meth)acrylate resin comprising as stabilizer at least one non-nucleophilic amine base. This amine base is preferably a non-cyclic amine base, i.e. the amine group is not part of a ring.

The (meth)acrylate resin has the following constituents:
30% by weight to 80% by weight, preferably 40% by weight to 70% by weight, of (meth)acrylate monomers and optionally components copolymerizable with (meth)acrylates,
1% by weight to 20% by weight, preferably 1,5% by weight to 10% by weight, of crosslinkers, preferably di-, tri- or tetra(meth)acrylates,
15% by weight to 35% by weight, preferably up to 25% by weight, of polymers, which are preferably poly(meth)acrylates and/or polyesters, more preferably poly(meth)acrylates,
0% by weight to to 30% by weight, of urethane (meth)acrylates, 0.1% by weight to 5% by weight, preferably 0.5% by weight to 1.5% by weight, of aromatic tertiary amine as accelerator,
0.1% by weight to 1.0% by weight, preferably 0.1% by weight to 0.5% by weight, even more preferably 0.2% by weight to 0.5% by weight, of at least one non-cyclic, non-nucleophilic amine base.

0.05% by weight to 5% by weight, more preferably 0.2-0.6% by weight, of adhesion promoters, preferably a phosphoric ester, in particular 2-hydroxyethyl methacrylate phosphate.

The monomers present in the reaction resin are compounds selected from the group of (meth)acrylates such as alkyl (meth)acrylates of straight-chain, branched or cycloaliphatic alcohols having 1 to 40 carbon atoms, for example methyl (meth)acrylate, ethyl (meth)acrylate, n-butyl (meth)acrylate, 2-ethylhexyl (meth)acrylate, stearyl (meth)acrylate, lauryl (meth)acrylate; aryl (meth)acrylates, for example benzyl (meth)acrylate; mono(meth)acrylates of ethers, polyethylene glycols, polypropylene glycols or mixtures thereof having 5 to 80 carbon atoms, such as tetrahydrofurfuryl (meth)acrylate, methoxy(m)ethoxyethyl (meth)acrylate, benzyloxymethyl (meth)acrylate, 1-ethoxybutyl (meth)acrylate, 1-ethoxyethyl (meth)acrylate, ethoxymethyl (meth)acrylate, poly(ethylene glycol) methyl ether (meth)acrylate and poly(propylene glycol) methyl ether (meth)acrylate. Suitable as constituents of monomer mixtures are also additional monomers having a further functional group, such as α,β-unsaturated mono- or dicarboxylic acids, for example acrylic acid, methacrylic acid, or itaconic acid; esters of acrylic acid or methacrylic acid with dihydric alcohols, for example hydroxyethyl (meth)acrylate or hydroxypropyl (meth)acrylate; acrylamide or methacrylamide; or dimethylaminoethyl (meth)acrylate. Examples of further suitable constituents of monomer mixtures are glycidyl (meth)acrylate or silyl-functional (meth)acrylates.

In addition to the (meth)acrylates recited above, the monomer mixtures may also include other unsaturated monomers that are copolymerizable with the abovementioned (meth)acrylates and by free-radical polymerization. These include inter alia 1-alkenes or styrenes. More specifically, the poly(meth)acrylate is expediently chosen in accordance with its proportion and composition with a view to the desired technical function.

A further constituent of the reaction resin according to the invention is crosslinkers. In particular, polyfunctional (meth)acrylates such as allyl (meth)acrylate. Particular preference is given to di- or tri(meth)acrylates such as 1,4-butanediol di(meth)acrylate, tetraethylene glycol di(meth)acrylate, triethylene glycol di(meth)acrylate or trimethylolpropane tri(meth)acrylate.

Also present in so-called MO-PO systems alongside the recited monomers are polymers, also referred to as prepolymers for better differentiation in the context of this intellectual property right, preferably polyesters or poly(meth)acrylates. These are used to improve the polymerization properties, mechanical properties, adhesion to the substrate and also the optical requirements of the resins. The prepolymer content of these reaction resins is between 10% by weight and 40% by weight, preferably between 15% by weight and 35% by weight. Both the polyesters and the poly(meth)acrylates may have additional functional groups to promote adhesion or for copolymerization in the crosslinking reaction, for example in the form of double bonds. Said poly(meth)acrylates are generally composed of the same monomers as those already listed with regard to the monomers in the resin system. They may be obtained by solution polymerization, emulsion polymerization, suspension polymerization, bulk polymerization or precipitation polymerization and are added to the system as the pure substance. Said polymers are obtained in bulk form via polycondensation or ring-opening polymerization and are composed of structural units known for such applications.

The urethane (meth)acrylates optionally present are understood in the context of this invention as meaning compounds having (meth)acrylate functionalities that are linked together via urethane groups. They are obtainable through the reaction of hydroxyalkyl (meth)acrylates with polyisocyanates and polyoxyalkylenes having at least two hydroxy functionalities. In place of hydroxyalkyl (meth)acrylates it is also possible to use (meth)acrylic esters with oxiranes, for example ethylene oxide or propylene oxide, or corresponding oligo- or polyoxiranes. An overview by way of example of urethane (meth)acrylates having a functionality greater than two is given in DE 199 02 685 . A commercially available example produced from polyols, isocyanates and hydroxy-functional (meth)acrylates is EBECRYL 230-Allnex. In a reaction resin, urethane (meth)acrylates increase flexibility, tear strength and elongation at break without major temperature dependence. This has an effect on the coating in two ways: the temperature stability of the coating increases and the disadvantages of a higher degree of crosslinking - embrittlement and adhesion to the surface - caused by the higher content of crosslinkers can be compensated or even improved. In an embodiment comprising urethane (meth)acrylates, the reaction resin according to the invention contains between 5% by weight and 60% by weight, preferably between 10% by weight and 30% by weight, of the described urethane (meth)acrylates.

The employed urethane (meth)acrylates preferably have a molecular weight M_{w} greater than 800 g/mol, in particular equal to or greater than 2000 g/mol.

Initiation systems that may be used in the described (meth)acrylate resins are well-known redox systems and do not need to be discussed in detail here. Such systems in principle comprise at least one oxidant and at least one accelerator/reductant that react together even at room temperature in order to generate free radicals that are effective in initiating polymerization reactions. In an alternative nomenclature, the oxidant can also be referred to as the initiator and the accelerator as reductant. According to the invention, it is possible to use a combination of oxidant and reductant known in the prior art that interact in this way. Examples of particularly suitable oxidants/initiators include, without restriction, organic peroxides such as benzoyl peroxide, dilauroyl peroxide and other diacyl peroxides, hydroperoxides such as cumene hydroperoxide, peresters such as t-butyl peroxybenzoate; ketone hydroperoxides such as methyl ethyl ketone hydroperoxide, organic salts of transition metals such as cobalt naphthenate. In a preferred embodiment of the present invention, the oxidant comprises an organic peroxide, most preferably benzoyl peroxide (BPO).

In an embodiment of the present invention, the accelerator is an aromatic tertiary amine.

Representative accelerators include at least one of N,N-dimethyl-p-aniline (DMA); N,N-dimethyl-p-toluidine (DMPT); N-(2-hydroxyethyl)-N-methyl-p-toluidine (MHPT); N,N-diethyl-p-toluidine (DEPT); ethoxylated N,N-diethyl-p-toluidine (eDEPT); N,N-diisopropanol-p-toluidine (DIPT); N,N-diisopropanol-p-chloroaniline; N,N-diisopropanol-p-bromoaniline; N,N-diisopropanol-p-bromo-m-methylaniline; N,N-dimethyl-p-chloroaniline; N, N-dimethyl-p-bromoaniline; N,N-diethyl-p-chloroaniline; N, N-diethyl-p-bromoaniline; or other p-halogenated aniline derivatives.

In one embodiment of the present invention, the accelerator is present within a range from 0.05% to 10% by weight, preferably about 0.1% to about 6.0% by weight, of the polymerizable (meth)acrylate resin composition. In a most preferred embodiment of the present invention, the accelerator is DIPT and the oxidant is benzoyl peroxide.

In the inventive embodiment of the present invention, the (meth)acrylate resin composition includes a stabilizer. The stabilizer differs from the accelerator/reductant, since it does not accelerate the breakdown of the oxidant and consequently does not on its own facilitate the curing of the composition. However, when used with an accelerator as mentioned above, the stabilizer will improve the reactivity of the system. In a preferred embodiment of the present invention, the stabilizer comprises, non-nucleophilic amine bases such as 1,1,3,3-tetramethylguanidine (TMG), N,N-diisopropylethylamine (DIPEA), N,N'-di-o-tolylguanidine (DOTG) or tributylamine (TBA). In a most preferred embodiment of the present invention, the stabilizer comprises 1,1,3,3-tetramethylguanidine (TMG). The non-nucleophilic amine bases are particularly preferably a non-cyclic, non-nucleophilic amine, where non-cyclic in this regard refers to an amine in which at least one amine group is not part of a cyclic structure. There is no restriction on such compounds having cyclic substituents.

The stabilizer is preferably present in a concentration of 0.10% to 3.0% by weight based on the total weight of the (meth)acrylate resin composition.

In the present invention, an adhesion promoter is additionally added to the acrylic composition. The adhesion promoters can in particular be phosphorus-containing compounds generally described for this purpose, such as monoesters of phosphinic acid and mono- and diesters of phosphonic and phosphoric acids having at least one substituent that has a vinyl or allyl group. Preference is given here to vinyl groups. Specific examples of such phosphorus-containing adhesion promoters are 2-methacryloyloxyethyl phosphate, bis(2-methacryloxyoxyethyl) phosphate, 2-acryloyloxyethyl phosphate, bis(2-acryloyloxyethyl) phosphate, methyl (2-methacryloyloxyethyl) phosphate, ethyl methacryloyloxyethyl phosphate, methyl acryloyloxyethyl phosphate, ethyl acryloyloxyethyl phosphate, propyl acryloyloxyethyl phosphate, isobutyl acryloyloxyethyl phosphate, ethylhexyl acryloyloxyethyl phosphate, halopropyl acryloyloxyethyl phosphate, haloisobutyl acryloyloxyethyl phosphate or haloethylhexyl acryloyloxyethyl phosphate. Alternatively, it is also possible to use vinylphosphonic acid, cyclohexene-3-phosphonic acid, α-hydroxybutene-2-phosphonic acid, 1-hydroxy-1-phenyl-methane-1,1-diphosphonic acid, 1-hydroxy-ethane-1,1-diphosphonic acid, 1-amino-1-phenyl-1,1-diphosphonic acid, 3-amino-3-hydroxypropane-1,1-diphosphonic acid, aminotris(methylenephosphonic acid), gamma-aminopropylphosphonic acid, gamma-glycidoxypropylphosphonic acid, phosphoric acid mono-2-aminoethyl ester, allylphosphonic acid, allylphosphinic acid, β-methacryloyloxyethylphosphinic acid; diallylphosphinic acid; 3-methacryloyloxyethylphosphinic acid and allylmethacryloyloxyethylphosphinic acid. In addition, combinations of two or more of these adhesion promoters are also possible. A preferred adhesion promoter is 2-hydroxyethyl methacrylate phosphate (HEMA phosphate). Other alternative, although less preferred, adhesion promoters are beta-CEA or methacrylic acid. What many, but not necessarily all, adhesion promoters have in common is that it is entirely possible for them to be copolymerized during curing of the reaction resin. It is also possible to use combinations of different copolymerizable and non-polymerizable adhesion promoters, or one of each.

It is also possible for the non-cyclic strong amine base acting as stabilizer to be mixed with acidic adhesion promoters such as 2-hydroxyethyl methacrylate phosphate prior to production of the (meth)acrylate resin. The mixture of stabilizer and acidic adhesion promoter can then be added to a reaction resin. This embodiment allows reaction resins to be subsequently furnished with an adhesion promoter after production.

As auxiliaries and additives, it is additionally possible to use chain-transfer agents, plasticizers, paraffins, additional stabilizing additives such as sterically hindered phenols, inhibitors, waxes and/or oils. The additional stabilizing additives are not components of or alternatives to the stabilizers used according to the invention. Rather, they are customary additives such as UV stabilizers or oxidation stabilizers.

The paraffins are added to prevent inhibition of polymerization by oxygen in the air. It is possible to use for this purpose a plurality of paraffins having different melting points in different concentrations.

All compounds known from free-radical polymerization may be used as optionally included chain-transfer agents. Preference is given to using mercaptans such as n-dodecyl mercaptan. As optionally added plasticizers, preference is given to using esters, polyols, oils, low-molecular-weight polyethers or phthalates.

Optionally added defoamers are preferably selected from the group consisting of alcohols, hydrocarbons, paraffin-based mineral oils, glycol derivatives, derivatives of glycolic esters, acetic esters and polysiloxanes.

It should also be noted that reaction resins, including for example the reactions resins according to the invention, are generally stored and used as a 2C system. In such systems there are two separate components that are mixed together before application and applied within a system-specific pot life. This pot life is for example of the order of 20 min, but may also be shorter or materially longer, of up to 60 min. In 2C systems of this kind, one component comprises the initiator and the other the accelerator. The stabilizer is preferably present in both fractions or in the same fraction as the accelerator. In addition, it is possible for the actual reaction resin to be divided between the two components or for one component to consists only of the active initiator or accelerator components (and optionally stabilizers). The options for configuring a 2C system are overall generally known from the prior art.

Further features and advantages of the present invention are elucidated hereinbelow with reference to examples, but are not intended to limit the scope of protection in any way. Unless otherwise stated, all values in % by weight are based on the (meth)acrylate resin.

### Examples

### Production of an amine-free (meth)acrylate resin based on EP 146 90 21

### (Referred to hereinafter as base resin):

Base resin for further experiments was produced by mixing the following components:

| **Substance name/Material** | **Weight** |
|---|---|
| Methyl methacrylate | 1577.0 g |
| Copolymer of methyl methacrylate and butyl methacrylate (Degalan LP 64/12, copolymer of 60% butyl methacrylate, 40% methyl methacrylate and methacrylic acid, having a molecular weight of 60 000 g/mol) | 1650.0 g |
| Ethylene glycol dimethacrylate | 100.0 g |
| Paraffin (softening point 46 to 48°C) | 15.0 g |
| Paraffin (softening point 52 to 54°C) | 15.0 g |
| Paraffin (softening point 63 to 66°C) | 10.0 g |
| Co-stabilizer (Alkanox 240; Alkanox 240 is tris(2,4-di-tert-butylphenyl)phosphite) | 25.0 g |
| 2,6-Di-tert-butyl-4-methylphenol | 3.0 g |
| 2-Hydroxyethyl methacrylate | 1500.0 g |
| Methacryloyloxyethyl phosphate | 15.0 g |
| Defoamer (BYK 052, available from BYK Chemie) | 25.0 g |
| Sum | 4935.0 g |

The produced base resin was used to produce further methacrylate resins through the addition of various amounts of accelerators and stabilizers.

| **Example** | **Base resin** | **Accelerator** | **Co-activator** | **Other** | **Total** |
|---|---|---|---|---|---|
| Comparative example 1 | 592.2 g | 4.8 g DIPT | - | 3.0 g MMA | 600 g |
| Comparative example 2 | 592.2 g | 4.8 g DIPT | 3.0 g DABCO | - | 600 g |
| Example 3 | 592.2 g | 4.8 g DIPT | 3.0 g TMG | - | 600 g |
| Comparative example 4 | 592.2 g | 4.8 g DMPT | - | 3.0 g MMA | 600 g |
| Example 5 | 592.2 g | 4.8 g DMPT | 3.0 g TMG | - | 600 g |
| Noninventive comparative example 6 | 592.2 g | 4.8 g MHPT | - | 3.0 g MMA | 600 g |
| Inventive example 7 | 592.2 g | 4.8 g MHPT | 3.0 g TMG | - | 600 g |

### Abbreviations

### Accelerator

DIPT: N,N-Diisopropanol-p-toluidine
DMPT: N,N-Dimethyl-p-toluidine
MHPT: N-(2-Hydroxyethyl)-N-methyl-p-toluidine

### Co-activators (stabilizers)

DABCO: 1,4-Diazabicyclo[2.2.2]octane
TMG: 1,1,3,3-Tetramethylguanidine

### Curing experiments

To 100 parts by weight of the produced methacrylate resins was added for curing 2 parts by weight of curing powder (50% BPO in dicyclohexyl phthalate), the mixture was stirred for two minutes and then applied to a metal surface or poured into the above test beaker in an approx. 2 mm layer thickness.

The pot life was determined by measuring the time taken for the material to independently warm from room temperature (20-22°C) to 32°C after stirring in the curing agent.

The temperature maxima (Tₘₐₓ) were determined by measuring the time taken for 20 g of resin in a PE beaker having a diameter of 45 mm to reach the temperature maximum during curing.

The time until the surface test (S-test) has been passed is determined as the time from which the surface of the resin layer poured out in a thickness of 2 mm has been cured and is non-tacky.

### Determination of storage stability at 50°C

To examine the storage stability, 100 ml glass bottles were in each case filled with 90 ml of the produced methacrylate resin. The glass bottles were closed and placed in a heating cabinet at 50°C. The stability of the methacrylate resins was visually checked several times a day.

### Determination of storage stability at 90°C

To examine the storage stability, 100 ml glass bottles were in each case filled with 90 ml of the produced methacrylate resin. The glass bottles were closed and placed in a heating cabinet at 90°C. The stability of the methacrylate resins was visually checked several times a day.

### Results for the effect of stabilizers

| **Example** | **Accelerator** | **Stabilizer** | **Pot life** | **S-test** | **Tmax** |
|---|---|---|---|---|---|
| Comparative example 1 | DIPT | - | 40 min | 120 min | 43 min / 138°C |
| Comparative example 2 | DIPT | DABCO | 6 min | 12 min | 9 min / 130°C |
| Example 3 | DIPT | TMG | 5 min | 10 min | 8 min / 156°C |
| Comparative example 4 | DMPT | - | 8 min | 14 min | 9 min / 148°C |
| Example 5 | DMPT | TMG | 2.5 min | 6 min | 5 min / 140°C |
| Comparative example 6 | MHPT | - | 12 min | 25 min | 15 min / 143°C |
| Example 7 | MHPT | TMG | 3 min | 6 min | 4 min / 150°C |

The rapid curing of the resins comprising co-activator was evidenced by reaching the maximum temperature Tₘₐₓ more quickly and by the shorter time in the S-test.

### Results for storage stability at 90°C

| **Example** | **Accelerator** | **Stabilizer** | **Storage stability at 90°C** |
|---|---|---|---|
| Comparative example 1 | DIPT | - | < 3 days |
| Comparative example 2 | DIPT | DABCO | 3 days |
| Example 3 | DIPT | TMG | 10 days |
| Comparative example 4 | DMPT | - | < 1 day |
| Example 5 | DMPT | TMG | 10 days |
| Comparative example 6 | MHPT | - | < 1 day |
| Example 7 | MHPT | TMG | > 5 days |

### Results for storage stability at 50°C

| **Accelerator** | **Stabilizer** | **Storage stability at 50°C** | |
|---|---|---|---|
| DMPT | - | 7 days | |
| DMPT | TMG | | ➢ 44 days |

The higher storage stability was evidenced by the longer time until polymerization during storage compared with the prior art. When using the co-activator TMG in accordance with the invention, the storage stability was considerably higher than when using the co-activator of the prior art DABCO.

### Example 8

### Preparation of a solution of the stabilizer and adhesion promoter

70 g of methacryloyloxyethyl phosphate was mixed with 29.97 g of MMA and 0.03 g of Topanol O. To this solution was added 35 g of 1,1,3,3-tetramethylguanidine (TMG). A clear viscous liquid formed with slight evolution of heat.

To 100 g of DEGADUR 112 (reaction resin from Röhm GmbH) was added 0.7 g of methacryloyloxyethyl phosphate and the mixture was stirred at 50°C for 12 weeks.

To 100 g of DEGADUR 112 (reaction resin from Röhm GmbH) was added 1.0 g of the solution of stabilizer and adhesion promoter. The mixture was storage stable at 50°C for 12 weeks.

## Claims

1. Reaction resin comprising at least one (meth)acrylate monomer, at least one polymer and/or urethane (meth)acrylate, at least one adhesion promoter having at least one acidic group and at least one non-nucleophilic base, wherein the reaction resin includes 30% by weight to 80% by weight of (meth)acrylate monomers and optionally components copolymerizable with the (meth)acrylate monomers,
1% by weight to 20% by weight of di-, tri- or tetra(meth)acrylates as crosslinkers,
15% by weight to 35% by weight of poly(meth)acrylates and/or polyesters as prepolymers,
0% by weight to 30% by weight of urethane (meth)acrylates,
0.1% by weight to 5% by weight of aromatic tertiary amine as accelerator,
0.1% by weight to 1.0% by weight of at least one non-cyclic, non-nucleophilic amine base,
0.05% by weight to 5% by weight of at least one phosphoric ester as adhesion promoter.

2. Reaction resin according to Claim 1, **characterized in that** the non-nucleophilic base is a non-nucleophilic amine.

3. Reaction resin according to Claim 2, **characterized in that** the non-nucleophilic base is a guanidine, N,N'-diisopropylethylamine, a tributylamine or lithium diisopropylamide.

4. Reaction resin according to at least one of Claims 1 to 3, **characterized in that** the adhesion promoter is a phosphorus-containing compound or a mixture of different phosphorus-containing compounds.

5. Reaction resin according to Claim 4, **characterized in that** the phosphorus-containing compound is 2-hydroxyethyl methacrylate phosphate.

6. Reaction resin according to any one of claims1 to 5, **characterized in that** the reaction resin includes
40% by weight to 70% by weight of (meth)acrylate monomers and optionally components copolymerizable with the (meth)acrylate monomers,
1.5% by weight to 10% by weight of di-, tri- or tetra(meth)acrylates,
15% by weight to 25% by weight of poly(meth)acrylates as prepolymers,
0% by weight to 12% by weight of urethane (meth)acrylates,
0.5% by weight to 1.5% by weight of aromatic tertiary amine,
0.1% by weight to 0.5% by weight of at least one non-cyclic, non-nucleophilic amine base,
0.2% to 0.6% by weight of 2-hydroxyethyl methacrylate phosphate as adhesion promoter.

## Patentansprüche

1. Reaktionsharz umfassend wenigstens ein (Meth)acrylatmonomer, wenigstens ein Polymer und/oder Urethan(meth)acrylat, wenigstens einen Haftvermittler mit wenigstens einer sauren Gruppe und wenigstens einer nicht-nukleophilen Base, wobei das Reaktionsharz 30 Gew.-% bis 80 Gew.-% (Meth)acrylatmonomere und gegebenenfalls mit den (Meth)acrylatmonomeren copolymerisierbare Komponenten umfasst,
1 Gew.-% bis 20 Gew.-% Di-, Tri- oder Tetra(meth)acrylate als Vernetzer,
15 Gew.-% bis 35 Gew.-% Poly(meth)acrylate und/oder Polyester als Präpolymere,
0 Gew.-% bis 30 Gew.-% Urethan(meth)acrylate,
0,1 Gew.-% bis 5 Gew.-% an aromatischem tertiärem Amin als Beschleuniger,
0,1 Gew.-% bis 1,0 Gew.-% an wenigstens einer nichtcyclischen, nichtnukleophilen Aminbase,
0,05 Gew.-% bis 5 Gew.-% an wenigstens einem Phosphorsäureester als Haftvermittler.

2. Reaktionsharz nach Anspruch 1, **dadurch gekennzeichnet, dass** die nicht-nukleophile Base ein nicht-nukleophiles Amin ist.

3. Reaktionsharz nach Anspruch 2, **dadurch gekennzeichnet, dass** die nicht-nukleophile Base ein Guanidin, N,N'-Diisopropylethylamin, ein Tributylamin oder Lithiumdiisopropylamid ist.

4. Reaktionsharz nach wenigstens einem der Ansprüche 1 bis 3, **dadurch gekennzeichnet, dass** der Haftvermittler eine phosphorhaltige Verbindung oder ein Gemisch verschiedener phosphorhaltiger Verbindungen ist.

5. Reaktionsharz nach Anspruch 4, **dadurch gekennzeichnet, dass** die phosphorhaltige Verbindung 2-Hydroxyethylmethacrylatphosphat ist.

6. Reaktionsharz nach einem der Ansprüche 1 bis 5, **dadurch gekennzeichnet, dass** das Reaktionsharz enthält
40 Gew.-% bis 70 Gew.-% (Meth)acrylatmonomere und gegebenenfalls mit den (Meth)acrylatmonomeren copolymerisierbare Komponenten,
1,5 Gew.-% bis 10 Gew.-% Di-, Tri- oder Tetra(meth)acrylate,
15 Gew.-% bis 25 Gew.-% Poly(meth)acrylate als Präpolymere,
0 Gew.-% bis 12 Gew.-% Urethan(meth)acrylate,
0,5 Gew-% bis 1,5 Gew.-% an aromatischem tertiären Amin,
0,1 Gew.-% bis 0,5 Gew.-% an wenigstens einer nichtcyclischen, nichtnukleophilen Aminbase,
0,2 Gew.-% bis 0,6 Gew.-% 2-Hydroxyethylmethacrylatphosphat als Haftvermittler.

## Revendications

1. Résine réactionnelle comprenant au moins un monomère (méth)acrylate, au moins un polymère et/ou un (méth)acrylate d'uréthane, au moins un promoteur d'adhérence ayant au moins un groupe acide et au moins une base non nucléophile, la résine réactionnelle incluant 30 % en poids à 80 % en poids de monomères (méth)acrylate et facultativement des composants copolymérisables avec les monomères (méth)acrylate,
1 % en poids à 20 % en poids de di-, tri- ou tétra(méth)acrylates comme réticulants,
15 % en poids à 35 % en poids de poly(méth)acrylates et/ou de polyesters comme prépolymères,
0 % en poids à 30 % en poids de (méth)acrylates d'uréthane,
0,1 % en poids à 5 % en poids d'amine tertiaire aromatique comme accélérateur,
0,1 % en poids à 1,0 % en poids d'au moins une base aminée non nucléophile non cyclique,
0,05 % en poids à 5 % en poids d'au moins un ester phosphorique comme promoteur d'adhérence.

2. Résine réactionnelle selon la revendication 1, **caractérisée en ce que** la base non nucléophile est une amine non nucléophile.

3. Résine réactionnelle selon la revendication 2, **caractérisée en ce que** la base non nucléophile est une guanidine, de la N,N'-diisopropyléthylamine, une tributylamine ou un diisopropylamide de lithium.

4. Résine réactionnelle selon au moins l'une des revendications 1 à 3, **caractérisée en ce que** le promoteur d'adhérence est un composé phosphoré ou un mélange de différents composés phosphorés.

5. Résine réactionnelle selon la revendication 4, **caractérisée en ce que** le composé phosphoré est du phosphate de méthacrylate de 2-hydroxyéthyle.

6. Résine réactionnelle selon l'une quelconque des revendications 1 à 5, **caractérisée en ce que** la résine réactionnelle inclut
40 % en poids à 70 % en poids de monomères (méth)acrylates et facultativement de composants copolymérisables avec les monomères (méth)acrylates,
1,5 % en poids à 10 % en poids de di-, tri- ou tétra(méth)acrylates,
15 % en poids à 25 % en poids de poly(méth)acrylates comme prépolymères,
0 % en poids à 12 % en poids de (méth)acrylates d'uréthane,
0,5 % en poids à 1,5 % en poids d'amine tertiaire aromatique,
0,1 % en poids à 0,5 % en poids d'au moins une base aminée non nucléophile non cyclique,
0,2 % à 0,6 % en poids de phosphate de méthacrylate de 2-hydroxyéthyl comme promoteur d'adhérence.
